# EUROPEAN PATENT APPLICATION

(11) **EP 1 550 612 A1**
(43) Date of publication of application: **06.07.2005**
(21) Application number: 04010376.4
(22) Date of filing: 30.04.2004
(51) Int. Cl.: B65D 1/02, B29C 49/42

(54) **Longitudinally expandable plastic bottle, and method and apparatus for manufacturing the same**

(30) Priority: 30.12.2003 US 747132
(71) Applicant: Gohsho Company, Ltd., Nakakoma-gun, Yamanashi (JP)
(72) Inventor: Higuchi, Mitsuo, Nakakoma-gun, Yamanashi (JP)
(74) Representative: Kirschner, Klaus Dieter, Dipl.-Phys.

(57) **Abstract**

There is proposed and provided a plastic bottle (1) the longitudinal dimension (height) of which is decreased substantially when the bottle (1) is manufactured, as compared with the time when the bottle is filled with contents, a method for manufacturing the plastic bottle (1), and an apparatus for manufacturing the plastic bottle (1). When the bottle is manufactured, the bottle being constructed so that a longitudinal part or the whole of the bottle, except a mouth portion (3) at the upper end, has a bellows (2) shape in the horizontal direction, the bottle (1) is molded in a state of having substantially smaller volume and height than the volume and height at the time when the bottle is filled with contents, and when an empty portion is formed in the bottle by an operation of drinking up the contents, the bottle can be made again in a state of having substantially smaller volume and height (L') than the volume and height (L) at the time when the bottle has been filled with contents.

## Description

### BACKGROUND OF THE INVENTION

### Field of the Invention

The present invention relates to a plastic bottle having a different height between a case where it is filled with a liquid such as juice or mineral water and a case where it is empty, a method for manufacturing the plastic bottle, which mainly uses a blow molding process called stretch blow or injection blow or generally called PET resin blow, and an apparatus for manufacturing the plastic bottle

### Description of the Related Art

In recent years, the volume of production of synthetic resin bottles has become enormous.

A serous drawback of the synthetic resin bottle is that when juice or mineral water in the bottle is drunk up and the bottle is thrown away, the bottle remains in the original shape, and when the emptied bottle is thrown away in a trash container, the trash container is filled soon with bottles because the state is as if air is thrown away in the trash container, and eventually bottles are thrown away on the road, which harms the living environment. In addition, the recovery costs for emptied bottles and the labor costs for cleaning put a heavy burden on public utilities.

Also, although these synthetic resin bottles can be manufactured by easy means such as blow forming, the strength thereof is not enough for transportation on a motor vehicle or other transportation means accompanied by heavy vibrations and for piled-up display in a store.

Furthermore, when the bottles are transported from a bottle manufacturer to a company which fills the bottles with juice or mineral water, the bottles take a lot of space, and the state is as if air is transported. Therefore, the ratio of transportation costs to production costs is considerably high.

In the above situation, the inventor has proposed a liquid vessel that is devised so as to be capable of being contracted easily when an emptied liquid vessel is recovered.

This liquid vessel is made of a relatively soft synthetic resin, and the peripheral wall of the liquid vessel having a mouth on the top thereof is formed into a pleated shape (see Patent Document 1).

Also, the inventor has additionally proposed an invention of a vessel that has a shape such that the volume thereof can be decreased substantially by applying a load to the vessel in the vertical direction and/or the torsional direction, and means for keeping the contracted shape (see Patent Document 2).

According to the proposed inventions, when the vessel is collapsed, the height of vessel can be decreased and the contracted state can be kept.

As the conventional means for manufacturing plastic bottles, what is called the biaxial stretching blow molding process using a preform is mainly used.

For example, an invention has been proposed in which the opening/closing operation of a pair of molds into which the preform can be charged is performed by a ring and a rotating disk which are pivotally mounted so as to be rotatable through 180 degrees (see Patent Document 3). However, there has been proposed no invention of a new excellent mold for manufacturing bellows of the vessel and each fold forming the bellows and a manufacturing method therefor.

An invention is publicly known in which a preform, which is a primary product molded into a predetermined shape, is subjected to biaxial stretching blow molding using a primary blow molding mold to form a primary intermediate product, the primary intermediate product being heated to be heat contraction deformed compulsorily into a secondary intermediate product, and the secondary intermediate product is subjected to secondary blow molding using a secondary blow molding mold to form a bottle or other vessels without being hardly extended as compared with the primary blow (see Patent Document 4). However, the mold and method of this invention are used to obtain a vessel having heat resistance against very high heat contraction, but needless to say, they are not used to manufacture the before-mentioned vessel having a pleated shape.
[Patent Document 1] Japanese Patent Laid-Open No. 2001-213418 (abstract)
[Patent Document 2] Japanese Patent Laid-Open No. 2002-68156 (abstract)
[Patent Document 3] Japanese Patent Laid-Open No: 11 48327 (pages 3 and 4)
[Patent Document 4] Japanese Patent No. 2777790 (page 2)

### SUMMARY OF THE INVENTION

Generally, an obj ect of the present inventionis to propose and provide a plastic bottle the longitudinal dimension (height) of which is decreased substantially when the bottle is manufactured, as compared with the time when the bottle is filledwith contents, a method for manufacturing the plastic bottle, and an apparatus for manufacturing the plastic bottle.

Another object of the present invention is to propose and provide a plastic bottle in which the normal volume and longitudinal dimension thereof are provided when the bottle is filled with mineral water or juice, a method for manufacturing the plastic bottle, and an apparatus for manufacturing the plastic bottle.

Still another object of the present invention is to propose and provide a plastic bottle in which the volume (longitudinal dimension) of the bottle can be made very small when juice or mineral water in the bottle is drunk up and the bottle is thrown away, a method for manufacturing the plastic bottle, and an apparatus for manufacturing the plastic bottle.

Still another object of the present invention is to propose and provide a plastic bottle having a shape such that the bottle is easy to carry and that the bottle does not slip out of fingers even dew condensation occurs on the surface of bottle, a method for manufacturing the plastic bottle, and an apparatus for manufacturing the plastic bottle. Also, still another object of the present invention is to enable the longitudinal dimension of an emptied portion of bottle to be decreased during the time when the contents in the bottle is drunk.

Still another obj ect of the present invention is to provide a plastic bottle in which the number of bottles capable of being contained in a trash container is increased significantly as compared with the conventional bottle for which an emptied bottle is thrown away without decreasing the longitudinal dimension (height) and the trash container is filled soon with bottles and cannot contain bottles. By achieving the above object, a large quantity of empty bottles can be transported at the same time. Therefore, still another object of the present invention is to significantly reduce the recovery costs for emptied bottles and the labor costs for cleaning and recovering.

Amold in accordance with the present invention is suitable for manufacturing the above-described bottle in large quantities, and moreover can surely form a bellows portion and each fold forming the bellows. As a result, there could be proposed a plastic bottle which can keep a collapsed state thereof when the bottle is collapsed, and a manufacturing method therefor, and there could be provided an apparatus for manufacturing the plastic bottle.

A feature of the present invention is a plastic bottle in which when the bottle is manufactured, the bottle being constructed so that a longitudinal part or the whole of the bottle, except a mouth portion at the upper end, has a bellows shape in the horizontal direction, the bottle is molded in a state of having substantially smaller volume and height than the volume and height at the time when the bottle is filled with contents. When such a bottle is transported from a manufacturing plant to a contents charging plant, the longitudinal dimension (height, volume) thereof is substantially decreased, so that the quantity of transportation can be increased significantly as compared with the conventional plastic bottle.

Also, the plastic bottle in accordance with the present invention is easy to carry because the outer periphery thereof has a bellows shape, and there is no fear that the bottle slips out of fingers even dew condensation occurs.

Another feature of the present invention is that when an empty portion is formed in the bottle by an operation of drinking up the contents, the bottle can be made again in a state of having substantially smaller volume and height than the volume and height at the time when the bottle has been filled with contents.

As a result, even when the contents in the bottle is left undrunk, the bottle can be carried by being put in a bag such as a pocketbook. Also, when the contents are drunk up and the bottle is thrown away, the bottle is collapsed so that the volume and height thereof is significantly decreased, and then the collapsed bottle can be thrown away in a trash container. Therefore, the trash container can be prevented from being filled soon with bottles, and the recovery and transportation work can be made efficient as compared with the conventional work that is as if air is transported.

A feature of method for manufacturing a plastic bottle in accordance with the present invention is a simple method which includes a step of molding of the bottle constructed so that a longitudinal part or the whole of the bottle, except a mouth portion at the upper end, has a bellows shape in the horizontal direction, and a step of compression molding of the bottle so that the molded bottle is compressed in the longitudinal direction and the compressed state is kept at ordinary temperature. By this simple method, the above-described plastic bottle having excellent operation and effects can be obtained.

A feature of apparatus for manufacturing a plastic bottle in accordance with the present invention is a simply constructed apparatus which includes a mold for molding the bottle constructed so that a longitudinal part or the whole of the bottle, except a mouth portion at the upper end, has a bellows shape in the horizontal direction, and a compression molding mechanism for compressing the molded bottle in the longitudinal direction. By this simply constructed apparatus, the above-described plastic bottle having excellent operation and effects can be obtained in a large volume at a low cost.

Another feature of plastic bottle in accordance with the present invention is that the bellows shape of the bottle has an upper side having an arcuate shape protruding upward and a lower side having a straight shape. For the plastic bottles having such a feature, it has been found, as a result of repeated experiments, that the collapsed state can be kept when the bottle is transported or thrown away.

Another feature of the manufacturing method is that in the step of molding of the bottle, a preform is automatically fed into the mold, and the bellows shaped bottle is molded with a high-pressure air of about 40 kilogram. By this feature, a bottle can be manufactured in which there is no fear that the bottle is cracked, broken, or bent even in an expanding and contracting operation, for example, when the bottle is contracted for transportation from a molding plant to the contents charging plant, when the contents are drunk up and the empty portion of bottle is contracted, or when the bottle is thrown away by being collapsed completely.

Another feature of the manufacturing apparatus is that the compression molding mechanism, which compression molds the bottle so that unused plastic bottles are transported in large quantities from the molding plant to the contents charging plant, best suitably includes a mechanism for placing the bellows shaped bottle in the longitudinal direction and a mechanism for compressing the bottle in the longitudinal direction, and concretely the bottle is pressed from a bottom portion of the bottle toward the mouth portion by a piston and cylinder mechanism which is operated by a fluid pressure and is provided on the apparatus body.

Also, another feature of the present invention is that the mechanism for placing the bellows shaped bottle in the longitudinal direction is provided, on the apparatus body, with a mechanism for chucking the mouth portion with the mouth portion of the bottle downward.

Further, another feature of the present invention is that in the step of compression molding of the bottle, when the molded bottle is compressed in the longitudinal direction to collapse a bellows shaped portion of the bottle from one side or both sides in the lengthwise direction toward the center of the bottle, a state in which the bellows shaped portion is collapsed in a lapped manner can be kept, and that the method includes a step of charging contents, in which the bottle in the state in which the bellows shaped portion is collapsed in a lapped manner is transported to the contents charging plant where the bottle is filled with contents, and air is blown to expand the bottle before the contents are charged, or the bottle is restored to the original state before being collapsed under a pressure of contents charged. As a result, the quantity of transported bottles and the quantity of bottles contained in a trash container can be increased dramatically because the bottle can be collapsed, although conventionally, the bottles have been transported from the molding plant to the contents charging plant as if air is transported, the empty bottle has been bulky when being thrown away and the trash container has been filled soon with bottles, and an absolute quantity of bottles transported to a recycling plant has been restricted.

It has been found that the step of compression molding of the bottle is performed while air in the bottle is sucked, by which the work can be performed very easily and surely.

The configuration in which the whole shape of the bottle in accordance with the present invention is selected appropriatelyfromacircularcylinderincludinganelliptical one, a prism including a quadrangular one, a circular cone and a pyramid including truncated ones, a hourglass dram shape, and a barrel shape, the configuration in which the horizontally sectional shape of the bottle is appropriately selected from a circle including an ellipse and a quadrangle including a rectangle, and the configuration in which the invention can be applied to manufacturing means for a bottle with a label, on which a trademark, contents of bottle, and the like are printed, put at the outer periphery thereof are thought to be within the technical scope of the present invention.

Besides, the present invention has other excellent objects, features, operation, and effects of invention, and these are clarified by the description of an embodiment given below.

### BRIEF DESCRIPTION OF THE DRAWINGS

FIG. 1 is a front view showing the whole of a bottle in accordance with an embodiment;
FIG. 2 is a front view of the bottle shown in FIG. 1 in a collapsed state;
FIG. 3 is an enlarged sectional view of a bellows portion of the bottle shown in FIG. 1;
FIG. 4 is an enlarged sectional view of a shoulder portion of the bottle shown in FIG. 1;
FIG. 5 is a sectional explanatory view of a mold;
FIG. 6 is a sectional explanatory view of a compression molding mechanism, showing a state before the bottle is collapsed;

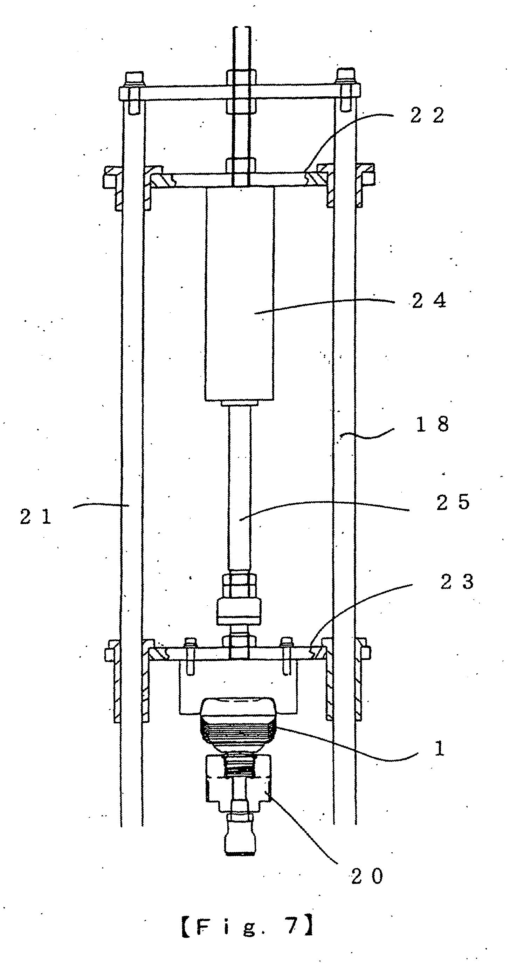

FIG. 7 is a sectional explanatory view showing a state of the bottle after being collapsed;
FIG. 8 is a piping diagram for a compression molding mechanism;
FIG. 9 is a sectional explanatory view showing a state in which the bottle is being collapsed;
FIG. 10 is a sectional explanatory view of a bellows portion of the bottle;
FIG. 11 is a sectional explanatory view of a bottom portion of the bottle; and
FIG. 12 is an explanatory view of a flow from manufacture to throw-away of the bottle.

### [Description of Symbols]

- (A): Height
- (A)': Height
- (L)': Height
- (L): height
- A: Cylinder portion
- B: Bottom portion
- C: Shoulder portion
- d1: Outside diameter
- d2: Outside diameter
- d3: Outside diameter
- h1: Height of upper part of first fold
- h2: Height of lower part of first fold
- 1: Bottle
- 2: Bellows portion
- 3: Mouth portion
- 4: Back portion
- 5: First bellows portion
- 6: Second bellows portion
- 7: Third bellows portion
- 8: Fourth bellows portion
- 9: Curved shape
- 10: Protruding arcuate shape
- 11: Straight shape
- 12: Peak
- 13: Valley
- 14: Upper surface
- 15: Lower surface
- 16: Mold
- 17: Preform
- 18: Compression molding mechanism
- 19: Horizontal bed
- 20: Chuck mechanism
- 21: Pillar
- 22: Support rod
- 23: Support rod
- 24: Cylinder
- 25: Piston rod
- 26: Pressing member
- 27: Pressure source
- 28: Piping
- 29: Three port connection valve
- 30: Appropriate shutoff valve
- 31: Piston upper part
- 32: Transportation
- 33: Cleaning
- 34: Sterilizing
- 35: Charging
- 36: Store
- 37: During drinking
- 38: About 1/4 to 1/10

### DETAILED DESCRIPTION OF THE PREFERRED EMBODIMENTS

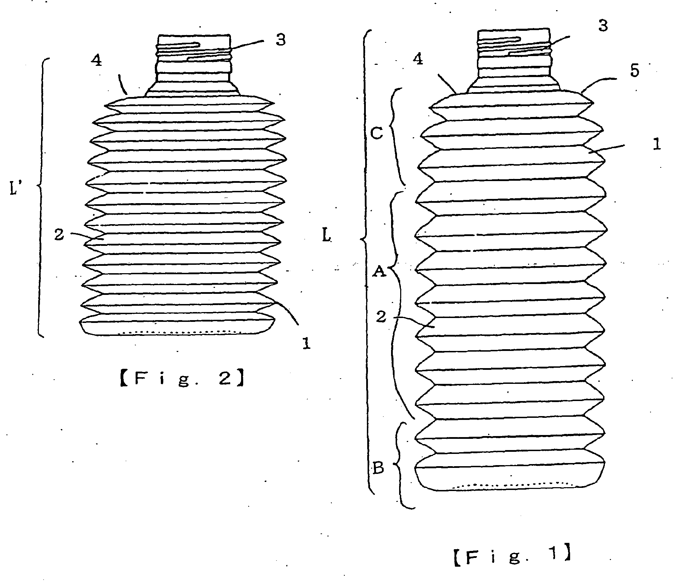

In FIG. 1, reference numeral 1 denotes a bottle obtained by a manufacturing method in accordance with the present invention. The bottle 1 shown in FIG. 1 is in a state of being removed from a mold 16 for molding the bottle 1, that is, in a state in which a height (L) thereof is equivalent to a height in a case where the bottle 1 is filled with contents.

The bottle 1 shown in FIG. 2 is in a state after the bottle 1 has been molded by a compression molding mechanism 18 which compresses the bottle 1 in the longitudinal direction, that is, in a state in which the bottle 1 has a height (L) ' in an empty state. The height of the bottle 1 can usually be contracted to 1/2 to 1/10 of the height (L)'. An embodiment of the present invention will now be described with reference to the accompanying drawings. First, the construction, operation, and effects of the present invention are explained because this explanation leads to easy understanding of the features of the present invention.

The bottle 1 shown in FIG. 1 is in a state of being removed from a mold, and the outer periphery and inner periphery in the direction of height (L) [length] excluding a mouth portion on the top have a bellows portion 2. At this time, the height (L) of the bottle 1 corresponds to a volume of 500 ml at the time when the bottle 1 is filled with contents.

More specifically, the bottle 1 shown in FIG. 1 has a height of 195 mm, a maximum diameter of 71.5 mm, and a volume of 500 ml, and has a shape having 12 folds of the bellows portion 2.

In FIG. 1, reference numeral 3 denotes a mouth portion for drinking, and 4 denotes a back portion ranging from the mouth portion 3 to a first bellows portion 5.

0033 In this embodiment, the outside diameter of the first bellow portion 5 is 30.25 mm, and the outside diameter of a second bellows portion 6 is 33.95 mm. The inside diameter of a portion between the first bellows portion 5 and the second bellows portion 6 is 47 mm.

Similarly, theoutsidediameterofathirdbellowsportion 7 is 34.85 mm, and the inside diameter of a portion between the second bellows portion 6 and the third bellows portion 7 is 51.1 mm.

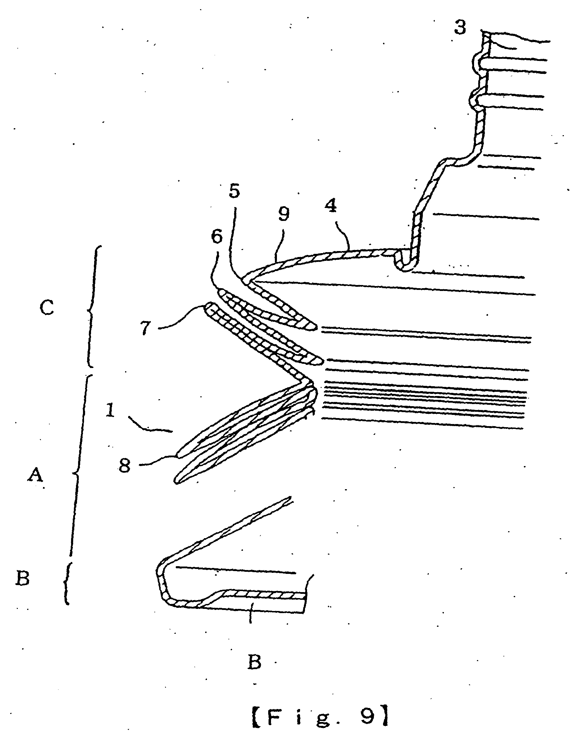

Further, in FIG. 9, the outside diameter of a fourth bellows portion 8 is 35.75, which is the maximum outside diameter, and the inside diameter of a portion between the third bellows portion 7 and the fourth bellows portion 8 is 54.5 mm.

The outside diameters of fifth to twelfth bellows portions are the same as the outside diameter of the fourth bellows portion 8, and the inside diameters of portions between these bellow portions are the same as the inside diameter of a portion between the third bellows portion 7 and the fourth bellows portion 8.

In this case, each fold has a shape like an unidentified flying object (UFO) called an Adamski type, and therefore is divided into upper and lower parts with respect to the horizontal direction.

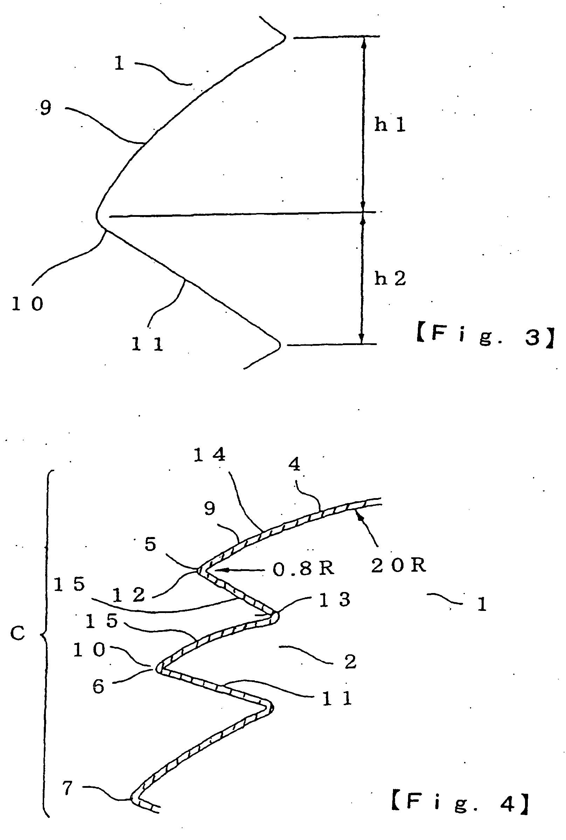

Referring to FIG. 3, the heights of an upper part h1 and a lower part h2 of the fold of the first bellows portion 5 are 6.5 mm and 5.5 mm, respectively, those of the fold of the second bellows portion 6 are 7 mm and 5 mm, respectively, and those of the fold of the third bellows portion 7 are 8.5 mm and 6.5 mm, respectively.

More specifically, in an example of dimensions of folds of the first bellows portion 5 to the third bellows portion 7 in FIG. 3, it is an important point that an upper surface 14 of the UFO shape has a curved shape 9 of 20 mmR protruding outward in this embodiment, and contrarily a lower surface 15 thereof has a straight shape 11 via a protruding arcuate shape 10 of 0.8 mmR.

This construction of this embodiment is explained together with the operation thereof. The bottle 1 in the state shown in FIG. 1 is divided into three portions: a cylinder portion A including a central portion and a lower portion, a bottom portion B, and a shoulder portion C as shown in FIG. 9. The portions A and C have two diameters, larger and small, so that the bottle 1 keeps a stable vertical state.

Specifically, the inside and outside diameters of the cylinder portion A including the central portion and lower portion are formed by the same fold, and the shoulder portion C is apparently curved in a convex shape of gentle inclination toward the mouth portion 3. In particular, in the shoulder portion C, as shown in FIG. 4, the inside diameter of a valley 13 forming the fold is decreased gradually in the range from the central portion to the mouth portion 3, and the inclination angle thereof has a larger difference than the cylinder portion A. Therefore, in a state in which the central portion is expanded, the inside diameter and inclination angle of a peak 12 and the valley 13 forming the fold can keep a state in which the height is contracted because of the strength and elastic force of material even when drinking operation is stopped during the time when the contents is drunk, and the bottle 1 is compressed in the longitudinal direction and the empty portion is collapsed.

This means that the shoulder portion C and the cylinder portion A of the bottle 1 press the folds of the shoulder portion C that may be contracted by the restoring force thereof, and the end surface of the valley 13 compresses the valley end surface of the fold located adjacently in the vertical direction.

In a state viewed from the apex of the peak 12 of fold at this time, the compressed state corresponds to a state in which the valleys 13 on both sides are pushed toward the apex of this peak 12. At this time, the compression component on a gentle inclination side of the upper surface 14 of fold is larger than the compression component on a sharp inclination side of the lower surface 15 because the inclination of the former compression component is smaller than the inclination of the latter compression component. Therefore, the valley 13 on the sharp inclination side moves toward the apex of the peak 12.

It can be thought that the bottle 1 undergoes two large changes at this time.

A first change is such that the inside diameter of the peak 12 forming the fold is increased by an expansion pressure, or the inside diameter of the valley 13 is decreased by a contraction pressure, and a second change is such that a sharp inclination surface of the lower surface 15 forming the fold is bent.

Subsequently, the sharp inclination surface passes just under the peak 12, and further slips into the inside of the gentle inclination side of the upper surface 14. When the height of the bottle 1 is decreased to the contracted state, a force for restoring the inside diameter of the peak 12 and the inside diameter of the valley 13 acts, or the bent state of the lower surface 15 formed by the above operation is restored to an expanded state, by which a stable state is formed.

Therefore, the contracted state can be kept even if a compressive force is not always applied.

For the valley 13 having a small inside diameter, the inside diameter thereof is further decreased under a contraction pressure, and a compressive stress is generated.

When the contraction pressure is removed, the stress acts so as to be released, and the expanded state is restored.

Therefore, the bottle 1 keeps the contracted state at atmospheric pressure, and when no compressive stress is generated by a difference in inside diameter of the valley 13, the contracted state is kept.

As a result of many experiments, the height (volume) of the bottle 1 could be made 1/4 to 1/10, and even if the bottle 1 is thrown away in a trash container, the space for throwing away the bottle 1 could be decreased significantly.

### Examples

The following is a description of an example of a mold suitable for mass production of the bottle 1 in accordance with the present invention.

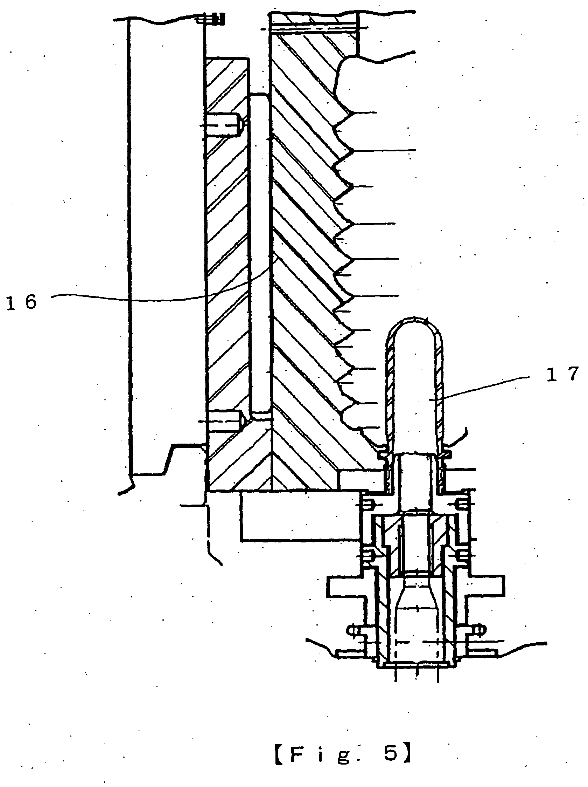

In FIG. 5, reference numeral 16 denotes a two-piece mold for manufacturing the cylindrical bottle 1 shown in FIG. 1. A preform 17 can be inserted through the bottom surface of the mold 16.

Explanation is given of a process for manufacturing the bottle 1 using the mold 16 in this example. First, the mold 16 is in an opened state.

In this state, the preform 17 is automatically inserted into the mold 16 from the downside. Then, after the preform 17 has been heated uniformly, high-pressure air of about 40 kilograms is sent into the preform 17 to expand the preform 17, by which the bottle 1 is formed.

The bottle 1 thus obtained has a height approximately equal to that at the time when the bottle 1 is filled with contents such as juice.

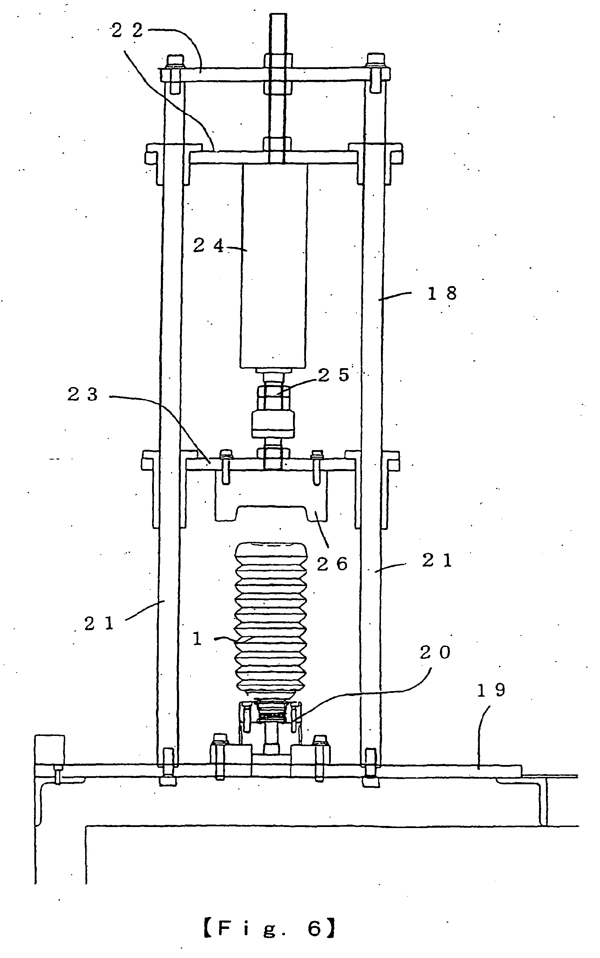

In FIG. 6, reference numeral 18 denotes a mechanism for compression molding the bottle 1, and 19 denotes a horizontal bed. In a central portion of the bed 19, although the details are not shown, a chuck mechanism 20 having an appropriate construction is provided. The mouth portion 3 of the bottle 1 is chucked by the chuck mechanism 20 so that the bottle 1 can surely be held in a reversed vertical state.

Reference numeral 21 denotes a pair of pillars erected on both sides of the chuck mechanism 20. In the intermediate portion and the top end portion of the pillars 21, upper and lower support rods 22 and 23 are provided to bridge the pillars 21. Reference numeral 24 denotes a cylinder fixed vertically between the support rods 22 and 23. A piston rod 25 of the cylinder 24 penetrates the lower support rod 23, and at the lower end thereof, a pressing member 26 is provided which engages slightly with the bottom portion B of the bottle 1 to press the bottom portion B of the bottle 1 toward the mouth portion 3.

A fluid supplied to the cylinder 24 may be any appropriate fluid such as air or oil. Means for supplying the fluid may be selected from publicly known means.

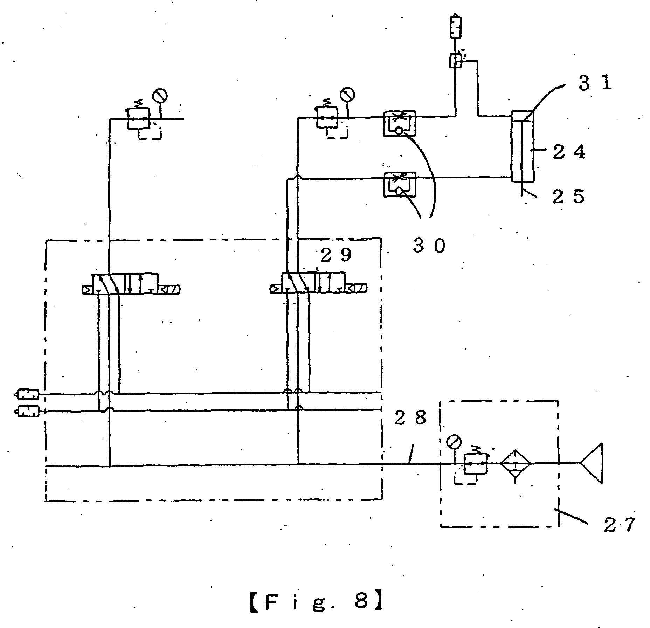

For example, in FIG. 8, reference numeral 27 denotes a pressure source. The output of the pressure source 27 is sent to portions above and below a piston upper part 31in the cylinder 24 via piping 28, a three port connection valve 29, and an appropriate shutoff valve 30.

The bottle 1 removed from the mold 16 is set on the chuck mechanism 20 of the compression molding mechanism 18.

Next, an appropriate fluid is sent to the portion above the piston upper part 31 in the cylinder 24 from the pressure source 27 via the piping 28. As a result, the piston upper part 31 and the piston rod 25 lower, and the pressing member 26 at the lower end of the piston rod 25 comes into contact with the bottom portion B of the bottle 1, by which the bottle 1 is compressed. The height of the bottle 1 having a small volume (height), which has been obtained as described above, is contracted to about 1/4 to 1/10 of the original height.

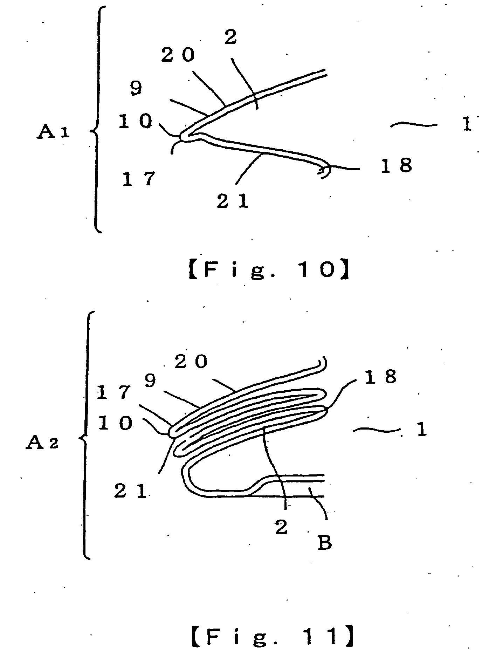

As shown in FIGS. 9 to 11, the cylinder portion A including the upper portion and the lower portion of the bottle 1 in this state becomes in a state in which the shoulder portion C and the cylinder portion A are compressed and contracted. Specifically, the folds in the shoulder portion C are pressed from a state of the bottle 1 which is removed from the mold 16 as shown in FIGS. 3 and 4, and the end surface of the valley 13 compresses the valley end surface of the fold located adjacently in the vertical direction.

In a state viewed from the apex of the peak 12 of fold at this time, the compressed state corresponds to a state in which the valleys 13 on both sides are pushed toward the apex of this peak 12. At this time, the compression component on a gentle inclination side of the upper surface 14 of fold is larger than the compression component on a sharp inclination side of the lower surface 15, and therefore the valley 13 on the sharp inclination side moves toward the apex of the peak 12 as described above. Thereupon, in the collapsed bottle 1, a sphere cut shape and the curved shape 9 which form an upper inclination portion of fold in the shoulder portion C balance with a lower inclination portion of fold in the cylinder portion A, so that the bottle 1 can be kept in the collapsed state without a cap being put.

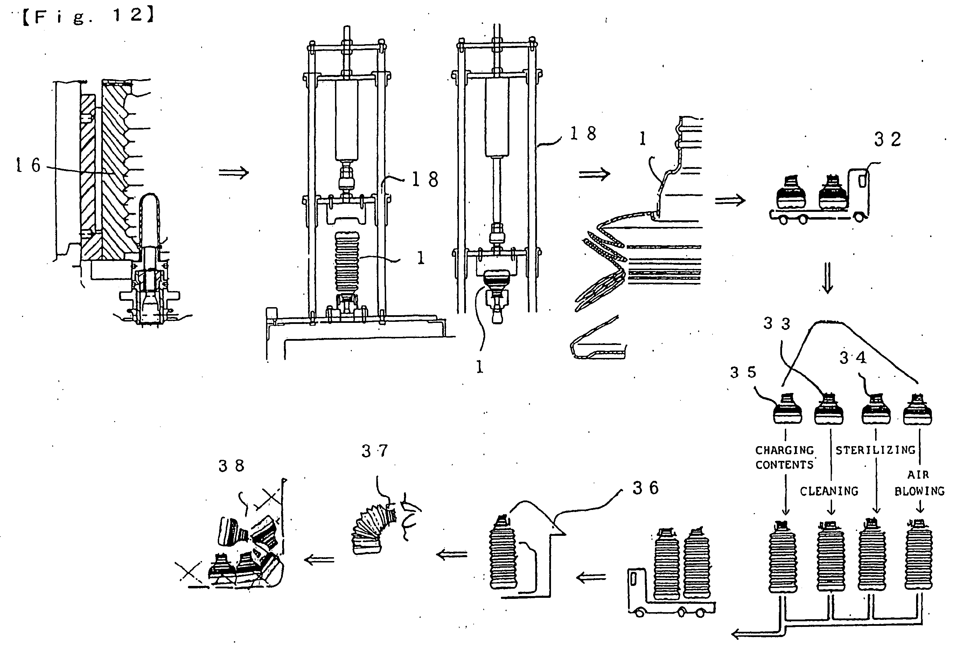

FIG. 12 shows a flow from manufacture to throw-away of the bottle in accordance with the present invention.

As described above, the bottle 1 in accordance with the present invention is molded using the mold 16. In this case, the height (volume) of the bottle 1 is (L) which is the same height as that at the time when the bottle 1 is filled with contents. Next, the bottle 1 is transferred to the compression molding mechanism 18, where the bottle 1 is compressed in the longitudinal direction. Thereby, the bottle (height) is contracted significantly, so that in transportation 32 of the bottle, the quantity of transportation can be increased dramatically as compared with the conventional bottle.

Next, the bottle 1 is transported to a contents charging plant, where cleaning 33 or sterilizing 34 using air pressure etc. is accomplished. When these jobs are not needed, the bottle 1 is expanded before charging 35 of contents. After a cap or a label has been put, the bottle 1 is displayed and sold in a store 36.

Even during drinking 37 of mineral water or other contents, an empty portion of the bottle 1 can be compressed to decrease the volume (height) of the bottle 1. Thereby, even the bottle 1 from which some of contents has been drunk can easily be thrust into a pocketbook and can be carried.

After all contents have been drunk up, the empty bottle 1 is collapsed from the upside or downside direction or both directions to reduce the volume of bottle to about 1/4 to 1/10 (38), and is thrown away in a trash container, etc. Thereby, the quantity of bottles contained in the trash container can be increased greatly. Also, in the recovery work, the quantity of recovered bottles can be increased significantly.

## Claims

1. A longitudinally expandable plastic bottle, in which when said bottle is manufactured, said bottle being constructed so that a longitudinal part or the whole of said bottle, except a mouth portion at the upper end, has a bellows shape in the horizontal direction, said bottle is molded in a state of having substantially smaller volume and height than the volume and height at the time when said bottle is filled with contents, and when an empty portion is formed in said bottle by an operation of drinking up said contents, said bottle can be made again in a state of having substantially smaller volume and height than the volume and height at the time when said bottle has been filled with contents.

2. A method for manufacturing a longitudinally expandable plastic bottle, comprising a step of molding of said bottle constructed so that a longitudinal part or the whole of said bottle, except a mouth portion at the upper end, has a bellows shape in the horizontal direction, and a step of compression molding of said bottle so that the molded bottle is compressed in the longitudinal direction and the compressed state is kept at ordinary temperature.

3. An apparatus for manufacturing a longitudinally expandable plastic bottle, comprising a mold for molding said bottle constructed so that a longitudinal part or the whole of said bottle, except a mouth portion at the upper end, has a bellows shape in the horizontal direction, and a compression molding mechanism for compressing the molded bottle in the longitudinal direction.

4. The longitudinally expandable plastic bottle according to claim 1, wherein the bellows shape of said bottle has an upper side having an arcuate shape protruding upward and a lower side having a straight shape.

5. The method for manufacturing a longitudinally expandable plastic bottle according to claim 2, wherein in forming the bellows shape of said bottle, said bellows shape has an upper side having an arcuate shape protruding upward and a lower side having a straight shape.

6. The apparatus for manufacturing a longitudinally expandable plastic bottle according to claim 3, wherein said mold for molding said bottle has a mold portion for forming said bellows shape having an upper side having an arcuate shape protruding upward and a lower side having a straight shape.

7. The method for manufacturing a longitudinally expandable plastic bottle according to claim 2 or 5, wherein in the step of molding of said bottle, a preform is automatically fed into a mold, and the bellows shaped bottle is molded with a high-pressure air of about 40 kilogram.

8. The apparatus for manufacturing a longitudinally expandable plastic bottle according to claim 3 or 6, wherein said compression molding mechanism comprises a mechanism for placing the bellows shaped bottle in the longitudinal direction and a mechanism for compressing said bottle in the longitudinal direction.

9. The apparatus for manufacturing a longitudinally expandable plastic bottle according to claim 3, 6 or 8, wherein said mechanism for placing the bellows shaped bottle in the longitudinal direction is provided, on the apparatus body, with a mechanism for chucking said mouth portion with the mouth portion of the bottle downward.

10. The apparatus for manufacturing a longitudinally expandable plastic bottle according to claim 3, 6 or 8, wherein the mechanism for compressing said bottle in the longitudinal direction in said compressionmoldingmechanism for saidbottle is constructed so that said bottle is pressed from a bottom portion of said bottle toward the mouth portion by a piston and cylinder mechanism which is operated by a fluid pressure and is provided on the apparatus body.

11. The method for manufacturing a longitudinally expandable plastic bottle according to claim 2, 5 or 7, wherein in the step of compression molding of said bottle, when the molded bottle is compressed in the longitudinal direction to collapse a bellows shaped portion of said bottle from one side or both sides in the lengthwise direction toward the center of said bottle, a state in which said bellows shaped portion is collapsed in a lapped manner can be kept.

12. The method for manufacturing a longitudinally expandable plastic bottle according to claim 2, 5, 7 or 11, wherein said method comprises a step of charging contents, in which said bottle in the state in which said bellows shaped portion is collapsed in a lapped manner is transported to a contents charging plant where said bottle is filled with contents, and air is blown to expand said bottle before said contents are charged, or said bottle is restored to the original state before being collapsed under a pressure of contents charged.

13. The method for manufacturing a longitudinally expandable plastic bottle according to claim 2, 5, 7 or 11, wherein the step of compression molding of said bottle is performed while air in said bottle is sucked.
